# EUROPÄISCHE PATENTSCHRIFT

(11) **EP 2 376 309 B1**
(45) Veröffentlichungstag und Bekanntmachung des Hinweises auf die Patenterteilung: **20.02.2013**
(21) Anmeldenummer: 09796302.9
(22) Anmeldetag: 09.12.2009
(51) Int. Cl.: B60N 2/44, B60N 2/68

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 13.01.2009 DE 102009005130; 30.06.2009 DE 102009031581
(43) Veröffentlichungstag der Anmeldung: 19.10.2011
(73) Patentinhaber: KEIPER GmbH & Co. KG, 67657 Kaiserslautern (DE)
(72) Erfinder: SCHUHMACHER, Gerd, 42369 Wuppertal (DE); HENKEL, Dieter, 42897 Remscheid (DE); SCHARWÄCHTER, Volker, 42855 Remscheid (DE); VOSS, Heinz, 51375 Leverkusen (DE); ASSMANN, Uwe, 42857 Remscheid (DE); FISCHER, Georg, 67722 Winnweiler (DE); SCHÄFER, Volker, 67731 Otterbach (DE); FRANZMANN, Günther, 67806 Rockenhausen (DE); LIBORIUS, Werner, 66879 Niedermohr (DE); KRAMM, Lars, 67705 Trippstadt (DE); WOLSIEFER, Harald, 67706 Krickenbach (DE)
(74) Vertreter: Liedtke, Markus
(86) Internationale Anmeldenummer: PCT/EP2009/008797
(87) Internationale Veröffentlichungsnummer: WO 2010/081508

(56) Entgegenhaltungen:
- DE-U1-202005 007 198
- JP-A- 2003 146 121

## Beschreibung

Die Erfindung betrifft einen Fahrzeugsitz gemäß dem Oberbegriff des Anspruchs 1.

Aus der DE 101 05 282 B4 ist ein Fahrzeugsitz bekannt, dessen als Lehneneinsteller dienende Beschläge an Adaptern als Strukturteilen befestigt sind. Ein weiterer Fahrzeugsitz dieser Art ist aus der DE 20 2005 007 198 U1 bekannt, dessen als Lehnenseitenholm dienendes Strukturteil am oberen Ende eine geringere Materialstärke aufweist, die zum unteren Ende hin anwächst. In der JP 2003-146121 A wird ein Fahrzeugsitz der eingangs genannten Art beschrieben, bei dem das Strukturteil um zusätzlich Metallteile verstärkt wird, um den Befestigungsbereich zu schaffen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das Strukturteil, an dem der Beschlag zu befestigen ist, kann ein beliebiger Bestandteil der Struktur des Fahrzeugsitzes sein, beispielsweise ein Lehnen-Seitenholm, ein Sitzrahmen-Seitenteil oder ein Adapter, der speziell für die Verbindung der Struktur mit dem Beschlag ausgebildet ist und an der Struktur befestigt wird. Der Beschlag kann ein beliebiger Einsteller des Fahrzeugsitzes sein, beispielsweise ein Lehneneinsteller oder ein Sitzneigungseinsteller, gegebenenfalls auch ein Sitzhöheneinsteller. Der BegriffBeschlag" soll aber auch alle anderen möglichen Getriebe- und Verriegelungsgelenke und sonstigen Gelenke umfassen. Hinsichtlich des inneren Aufbaus, der für die vorliegende Erfindung unerheblich ist, kann der Beschlag beispielsweise ein Getriebebeschlag oder ein Rastbeschlag sein. Um die beiden Beschlagteile relativ zueinander zu verdrehen, wird der Beschlag entsprechend angetrieben oder entriegelt. Die Erfindung ist insbesondere dann geeignet, wenn die äußere Gestalt des Beschlags eine Scheibenform ist, die wenige Befestigungsmöglichkeiten bietet. Die Befestigung erfolgt vorzugsweise mittels einer (ersten) Schweißnaht, worunter beliebige Geometrien und Schweißarten, beispielsweise dünne Laserschweißnähte, dicke MAG-Schweißraupen oder einzelne Widerstandsschweißpunkte, verstanden werden sollen.

Indem der Befestigungsbereich gegenüber den anderen Bereichen des Strukturteils durch weiteres Material versteift ist, wird die Materialstärke nur kleinflächig erhöht, nämlich im Befestigungsbereich. Gegenüber einer weitgehend gleichbleibenden, geringen Materialstärke wird die Festigkeit erhöht, insbesondere können höhere Momente übertragen werden, während gegenüber einer durchgehend gleichen, hohen Materialstärke bei vergleichbaren Festigkeitseigenschaften Gewicht und Kosten eingespart werden. Insbesondere im Crashfall können die vom Beschlag eingeleiteten oder in den Beschlag weiterzuleitenden Kräfte besser aufgenommen und weitergeleitet werden. Das weitere Material ist erfindungsgemäß solches, welches aus dem Raumbereich stammt, den nunmehr die Öffnung einnimmt, also welches bei der Ausbildung der Öffnung abfällt, d.h. die Öffnung wird nicht mit ihrer endgültigen Geometrie ausgestanzt, sondern kleiner, wobei Material für einen Kragenzug oder für Segmente verbleibt. Durch Umformen oder Umlegen eines solchen Kragenzugbereichs oder durch Umlegen wenigstens eines Segments wird dann vorzugsweise der Befestigungsbereich gebildet, bei welchem der umgelegte Bereich oder das umgelegte Segment am nicht-umgelegten Bereich des Strukturteils fixiert sein kann, insbesondere mittels einer zweiten Schweißnaht, worunter wiederum beliebige Geometrien und Schweißarten verstanden werden sollen. Die Fixierung kann aber auch mittels eines Formschlusses erfolgen.

Im folgenden ist die Erfindung anhand mehrerer in der Zeichnung dargestellter Ausführungsbeispiele näher erläutert. Es zeigen
- Fig. 1: einen Schnitt durch einen Teil des ersten Ausführungsbeispiels entlang der Linie I-I in Fig. 5,
- Fig. 2: eine Vergrößerung des Ausschnitts II in Fig. 1,
- Fig. 3: einen Schnitt durch das Strukturteil vor der Ausbildung des Befestigungsbereichs,
- Fig. 4: einen Schnitt durch das Strukturteil nach der Ausbildung des Befestigungsbereichs,
- Fig. 5: eine Seitenansicht eines Teils des ersten Ausführungsbeispiels,
- Fig. 6: eine perspektivische Ansicht eines Teils des ersten Ausführungsbeispiels,
- Fig. 7: eine schematische Darstellung eines erfindungsgemäßen Fahrzeugsitzes,
- Fig. 8: eine schematische ausschnittsweise (Ausschnitt VIII in Fig. 21) Darstellung eines Schnitts durch einen Beschlag mit Strukturteil gemäß dem zweiten Ausführungsbeispiel,
- Fig. 9: eine ausschnittsweise perspektivische Darstellung eines als Strukturteil dienenden Blechs in einem ersten Herstellungsschritt,
- Fig. 10: eine vergrößerte Schnittdarstellung entlang der Linie X-X in Fig. 9,
- Fig. 11: eine ausschnittsweise perspektivische Darstellung des Blechs von Fig. 9 in einem zweiten Herstellungsschritt,
- Fig. 12: eine vergrößerte Schnittdarstellung entlang der Linie XII-XII in Fig. 11,
- Fig. 13: eine ausschnittsweise perspektivische Darstellung des Blechs von Fig. 9 in einem dritten Herstellungsschritt,
- Fig. 14: eine vergrößerte Schnittdarstellung entlang der Linie XIV-XIV in Fig. 13,
- Fig. 15: eine ausschnittsweise perspektivische Darstellung des Blechs von Fig. 9 in einem vierten Herstellungsschritt,
- Fig. 16: eine vergrößerte Schnittdarstellung entlang der Linie XVI-XVI in Fig. 15,
- Fig. 17: eine ausschnittsweise perspektivische Darstellung des Blechs von Fig. 9 in einem fünften Herstellungsschritt,
- Fig. 18: eine vergrößerte Schnittdarstellung entlang der Linie XVIII-XVIII in Fig. 17,
- Fig. 19: eine ausschnittsweise schematische Schnittdarstellung nach dem Zusammensetzen des Beschlags und des Strukturteils vor dem Verschweißen,
- Fig. 20: eine Draufsicht auf einen Endbereich des Strukturteils samt Beschlag,
- Fig. 21: einen Längsschnitt entlang der Linie XXI-XXI in Fig. 20,
- Fig. 22: eine Draufsicht auf einen Endbereich des Strukturteils samt Beschlag, welche mit einem alternativen Schweißverfahren miteinander verbunden sind,
- Fig. 23: einen Längsschnitt entlang der Linie XXIII-XXIII in Fig. 22,
- Fig. 24: eine Detaildarstellung des Ausschnitts XXIV in Fig. 23,
- Fig. 25: eine schematische Seitenansicht eines erfindungsgemäßen Fahrzeugsitzes,
- Fig. 26: eine Teilansicht des dritten Ausführungsbeispiels ohne Beschlag,
- Fig. 27: einen Schnitt entlang der Linie XXVII-XXVII in Fig. 26 mit Beschlag,
- Fig. 28: das Strukturteils des dritten Ausführungsbeispiels als Rohling mit ausgestanztem zentralem Bereich,
- Fig. 29: das Strukturteil von Fig. 28 mit ausgestellten Segmenten nach einem ersten Umformschritt,
- Fig. 30: einen Schnitt entlang der Linie XXX-XXX in Fig. 29,
- Fig. 31: eine Teilansicht des vierten Ausführungsbeispiels,
- Fig. 32: einen Schnitt entlang der Linie XXXII-XXXII in Fig. 31,
- Fig. 33: einen Schnitt durch das Strukturteil des fünften Ausführungsbeispiels mit ausgestellten Segmenten nach einem ersten Umformschritt,
- Fig. 34: einen Schnitt entsprechend Fig. 33 mit umgelegten Segmenten,
- Fig. 35: einen Schnitt entsprechend Fig. 33 und 34 mit ausgebildeten Kanten,
- Fig. 36: eine Teilansicht einer Abwandlung zum dritten bis fünften Ausführungsbeispiel ohne Beschlag,
- Fig. 37: einen Schnitt entlang der Linie XXXVII-XXXVII in Fig. 36 mit Beschlag,
- Fig. 38: eine Teilansicht des sechsten Ausführungsbeispiels ohne Beschlag,
- Fig. 39: einen Schnitt entlang der Linie XXXIX-XXXIX in Fig. 38 mit Beschlag,
- Fig. 40: das Strukturteils des sechsten Ausführungsbeispiels als Rohling mit ausgestanztem zentralem Bereich,
- Fig. 41: einen Schnitt entlang der Linie XLI-XLI in Fig. 40,
- Fig. 42: das Strukturteil von Fig. 40 mit ausgestelltem Segment,
- Fig. 43: einen Schnitt entlang der Linie XLIII-XLIII in Fig. 42,
- Fig. 44: eine Teilansicht des siebten Ausführungsbeispiels,
- Fig. 45: einen Schnitt entlang der Linie XLV-XLV in Fig. 44,
- Fig. 46: eine Teilansicht des achten Ausführungsbeispiels ohne Beschlag,
- Fig. 47: eine Ansicht in Richtung des Pfeils XLVII-XLVII in Fig. 46 ohne Beschlag, und
- Fig. 48: einen Schnitt entlang der Linie XLVIII-XLVIII in Fig. 46 mit Beschlag.

Ein Fahrzeugsitz 1 für ein Kraftfahrzeug weist ein Sitzteil 3, eine Lehne 4; welche mittels je eines Beschlags 10 auf beiden Fahrzeugsitzseiten am Sitzteil 3 angebracht und relativ zu diesem neigungseinstellbar und/oder freischwenkbar ist. Die Beschläge 10 sind vorliegend als Rastbeschläge ausgebildet, deren innerer Aufbau beispielsweise in der WO 00/44582 A1 beschrieben ist, während sie hinsichtlich ihrer äußeren Gestalt eine Scheibenform aufweisen, wie beispielsweise in der US 6,799,806 A beschrieben ist. Alternativ sind die Beschläge 10 als Getriebebeschläge mit gleicherer äußerer Gestalt ausgebildet, aber einem inneren Aufbau, wie er beispielsweise in der DE 44 36 101 A1 beschrieben ist, die ein selbsthemmendes Exzenterumlaufgetriebe offenbart. Der innere Aufbau der Beschläge 10 kann jedoch von diesen beiden bekannten Beschlägen abweichen. Es ist auch möglich, einen einzigen Beschlag 10 auf einer Fahrzeugsitzseite mit einem Gelenk auf der anderen Fahrzeugsitzseite zu kombinieren.

Die beiden Beschläge 10 stehen mittels einer profilierten Übettragungsstange miteinander in Getriebeverbindung. Die Übertragungsstange ist horizontal und quer zur Fahrtrichtung angeordnet und um ihre eigene Achse A drehbar. Ein drehfest auf der Übertragungsstange sitzender Handhebel (oder Handrad) dient der manuellen Betätigung der Beschläge 10. Im Falle von Getriebebeschlägen ist auch eine motorische Betätigung möglich. Die nachfolgenden Richtungsangaben beziehen sich auf das Zylinderkoordinatensystem, welches durch die Achse A definiert ist.

Jeder Beschlag 10 weist ein erstes Beschlagteil 11, welches näherungsweise scheibenförrnig ausgebildet ist, und ein zweites Beschlagteil 12, welches ebenfalls näherungsweise scheibenförmig ausgebildet ist, auf. Um die beiden Beschlagteile 11 und 12 unter Einlage der zwischen denselben angeordneten Bauteilen axial zusammenzuhalten, ist ein Umklammerungsring 13 von der Seite des ersten Beschlagteils 11 auf das zweite Beschlagteil 12 gesetzt, und beispielsweise aufgepresst und/oder mit demselben verschweißt oder umgebördelt. Hierbei bilden das erste Beschlagteil 11, das zweite Beschlagteil 12 und der Umklammerungsring 13 ein Gehäuse in Scheibenform (Dosenform). Die beiden Beschlagteile 11 und 12 lagern einen Mitnehmer 14, der mit der Übertragungsstange zusammenwirkt, insbesondere drehfest oder auf Mitnahme mit dieser gekoppelt ist, und dessen Drehung den Beschlag 10 entriegelt (im Falle des Rastbeschlags) oder antreibt (im Falle des Getriebebeschlags). Die beiden Beschlagteile 11 und 12 sind so relativ zueinander verdrehbar.

Die Scheibenform bietet zwar den Vorteil einer kompakten Bauform, stellt jedoch genau deshalb, nämlich wegen der geringen zur Verfugung stehenden Flächen, besondere Herausforderungen an die Technik der Anbringung des Beschlags an die Strukturen von Sitzteil 3 und Lehne 4. Beispielhaft ist die Anbringung des Beschlags 10 an ein Strukturteil 15 beschrieben, welches ein integraler Teilbereich der Struktur der Lehne 4 ist. Am Strukturteil 15 ist eine - wenigstens näherungsweise zylindrische - Öffnung 16 ausgebildet, welche von einem Kanten 17 aufweisenden Befestigungsbereich 18 ringförmig (oder bogenförmig) umgeben wird. Die Kanten 17, welche entlang zweier axial zueinander versetzter Kreislinien angeordnet sind, definieren den Rand der Öffnung 16. Die Öffnung 16 kann auch eine andere Geometrie aufweisen, beispielsweise eine Sternform oder eine andere Form mit zyklischer Symmetrie bezüglich der Achse A.

Das Strukturteil 15 kann auch ein integraler Teilbereich der Struktur des Sitzteils 3 oder ein separater, mit der Struktur der Lehne 4 oder des Sitzteils 3 verbundener Adapter sein. Die Anwendung der Erfindung ist nicht auf die Anbindung eines Beschlages 10 an Sitzteil 3 and Lehne 4 begrenzt. Vielmehr lässt sie sich auf alle dem Fachmann bekannten Anbindungsfälle von Beschlägen und Komponenten an Strukturbauteilen anwenden. So kann beispielsweise auf gleiche Weise das Anbringen eines Beschlages für einen Sitzhöheneinsteller erfolgen, wie er in der nachveröffentlichten DE 10 2009 008 576 A1 beschrieben ist.

Der Beschlag 10 ist mit einer eine Schulter 10a aufweisenden Stirnseite, vorliegend mit der vom zweiten Beschlagteil 12 abgewandten Stirnseite des ersten Beschlagteils 11, am Strukturteil 15 angesetzt, wobei die Schulter 10a in die Öffnung 16 eingeführt ist, bis der Beschlag 10 am Befestigungsbereich 18 anliegt. Vorzugsweise nimmt die Öffnung 16 dann die Schulter 10a formschlüssig auf. Der so angesetzte Beschlag 10 ist fest (d.h. unlösbar) mit dem Strukturteil 15 verbunden, vorzugsweise angeschweißt, beispielsweise mittels einer oder mehrerer erster Schweißnähte 19, die vorzugsweise durch Laserschweißen erzeugt werden. Die ersten Schweißnähte 19 können auch durch andere Schweißarten, wie MAG-Schweißen, erzeugt werden. Sie können kreisförmig, kreisbogenförmig, punktförmig oder von anderer Geometrie sein. Die Öffnung 16 fluchtet mit der Achse A. Die Ringform (oder Bogenform) des Befestigungsbereichs 18 definiert eine radiale Breite b (beispielsweise 4 mm), welcher deutlich kleiner ist als der Durchmesser d (beispielsweise 52 mm) der Öffnung 16. Der Befestigungsbereich 18 kann optional durch eine oder mehrere zweite Schweißnähte 20 fixiert sein. Die zweite Schweißnaht 20 kann gegebenenfalls so tief ausgebildet sein, dass sie bis zum Beschlag 10 reicht und damit zusätzlich zur (oder anstelle der) ersten Schweißnaht 19 den Beschlag 10 am Strukturteil 15 befestigt. Die zweiten Schweißnähte 20 können ebenfalls kreisförmig, kreisbogenförmig, punktförmig oder von anderer Geometrie und durch Laserschweißen, MAG-Schweißen oder ein anderes Schweißverfahren hergestellt sein. Anstelle oder zusätzlich zu einer zweiten Schweißnaht 20 kann der Befestigungsbereich 18 auch mittels Durchsetzfügen fixiert sein, was in den Stanzprozess integrierbar ist und später optional durch zusätzliche zweite Schweißnähte 20 ergänzt werden kann.

Für die Herstellung einer optimierten Verbindung zwischen dem Strukturteil 15 mit dem ersten Beschlagteil 11 ist im Befestigungsbereich 18 weiteres Material angesammelt gegenüber den übrigen Bereichen des Strukturteils 15, um das Strukturteil 15 im lokalen Umfeld des Beschlags 10 zu versteifen. Das zusätzliche Material stammt aus dem Raumbereich, den nunmehr die Öffnung 16 einnimmt, fällt also bei der Ausbildung der Öffnung 16 ab und würde normalerweise als Abfall ausgestanzt werden. Hierzu wird ausgehend von einem Blech in einem vorbereitenden Schritt ein Rohling für das Strukturteil 15 ausgestanzt und optional der Außenrand 15a des Strukturteils 15 erzeugt, beispielsweise ein - gegebenenfalls im gleichen Arbeitsgang - um ca. 90° umgebogener Rand. Gleichzeitig oder in einem späteren Schritt wird innerhalb eines im wesentlichen ebenen, kreisförmige Bereichs, der (um beispielsweise zwei Materialstärken) in die gleiche Richtung wie der Außenrand 15a erhaben sein kann, ein zentraler Bereich ausgestanzt.

Die nachfolgenden Ausführungsbeispiele unterscheiden sich hinsichtlich der weiteren Bearbeitung des Strukturteils 15 und des entstehenden Befestigungsbereichs 18. Die Verfahrensschritte müssen nicht in einzelnen Fertigungsschritten beziehungsweise Werkzeugen stattfinden. Je nach Werkzeugkonzept lassen sich mehrere Verfahrensschritte in einem Fertigungsschritt beziehungsweise einem Werkzeug realisieren.

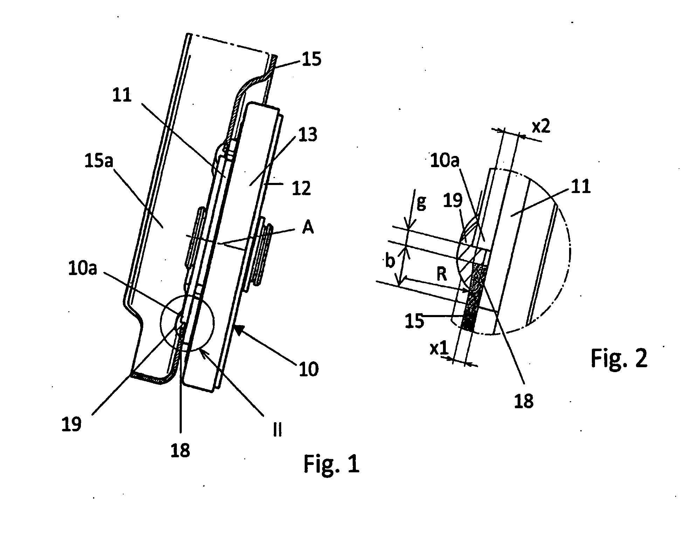

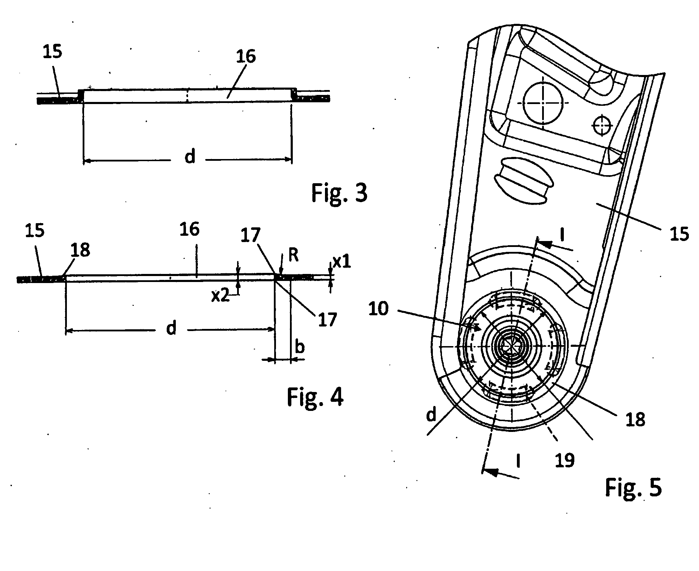

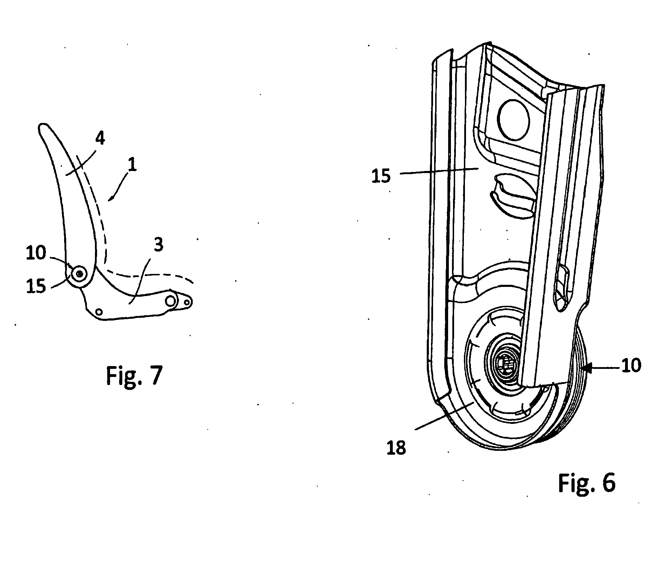

Im ersten Ausführungsbeispiel (Fig. 1 bis 6) wird zur Herstellung des Befestigungsbereichs 18 zunächst aus dem Material um den zentralen, ausgestanzten Bereich ein Kragenzug hergestellt (Fig. 3), wobei auch die Öffnung 16 mit ihrem Durchmesser d entsteht. Anschließend wird das Material des axial abstehenden Kragenzuges (durch axiales Stauchen und radiales Schieben) so umgeformt, dass der Befestigungsbereich 18 entsteht. Durch Nachbearbeitung werden die Kanten 17 ausgebildet (Fig. 4).

Der Befestigungsbereich 18 ist ein Bestandteil des Strukturteils 15, welcher komplett einstückig mit den anderen Bereichen des Stukturteils 15 ausgebildet ist. Während die anderen Bereiche des Strukturteils 15 mit einer im wesentlichen konstanten, mittlere Materialstärke x1 (vorliegend 1,2 mm) ausgebildet sind, weist der Befestigungsbereich 18 demgegenüber eine erhöhte (vergrößerte) Materialstärke auf, die in radialer Richtung von der mittleren Materialstärke x1 - am Übergang zu den anderen Bereichen des Strukturteils 15 - kontinuierlich anwächst bis zu einer maximalen Materialstärke x2 (vorliegend 1,5 mm) - am Rand der Öffnung 16 -, und zwar vorliegend im Profil in konkaver Ausbildung mit einem Radius R (vorliegend etwa 27 mm).

Der Durchmesser des die Schulter 10a aufweisenden Vorsprungs am Beschlag 10 ist etwas kleiner als der Durchmesser d der Öffnung 16, so dass zwischen Befestigungsbereich 18 und Schulter 10a ein ringförmiger Spalt mit der Spaltbreite g entsteht. Die axiale Abmessung des Spaltes wird durch die maximale Materialstärke x2 des Befestigungsbereichs 18 definiert. Die Spaltbreite g (beispielsweise 1,5 mm) kann näherungsweise der maximalen Materialstärke x2 entsprechen, wodurch ein wenigstens näherungsweise quadratischer Querschnitt entsteht. Bevorzugt ist aber ein möglichst kleiner Spalt, d.h. g << x1, x2, b. Die Schulter 10b liegt dann - wenigstens näherungsweise - bündig am Befestigungsbereich 18 bzw. den Kanten 17 an. Wenn der Beschlag 10 in die Öffnung 16 eingeführt ist, wird anschließend die erste Schweißnaht 19 angebracht, beispielsweise mit vier Schweißraupen, die in Umfangsrichtung der Öffnung 16 angeordnet sind und den Spalt, soweit vorhanden, teilweise füllen. Für eine Laserschweißnaht als erste Schweißnaht 19 ist eine sehr kleine, verschwindend geringe Spaltbreite g bevorzugt.

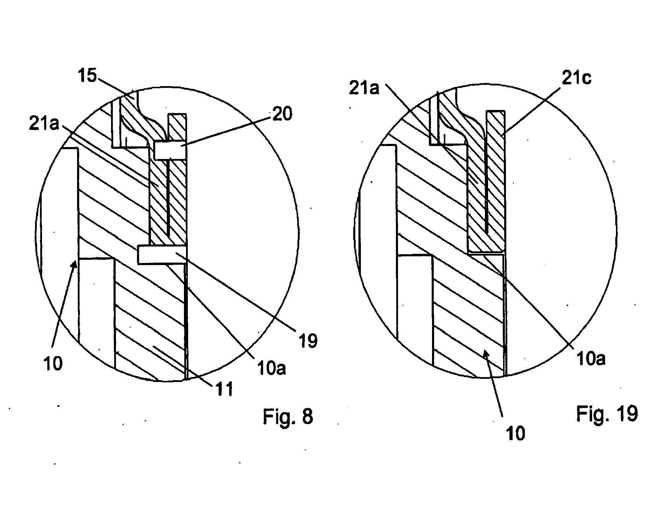

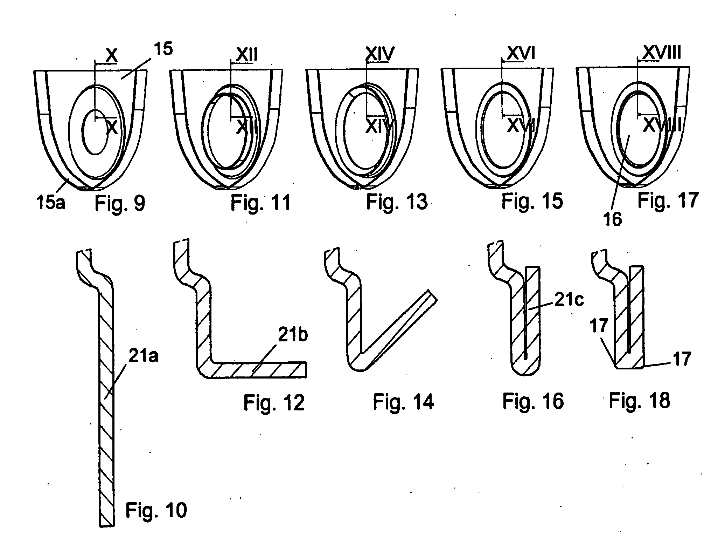

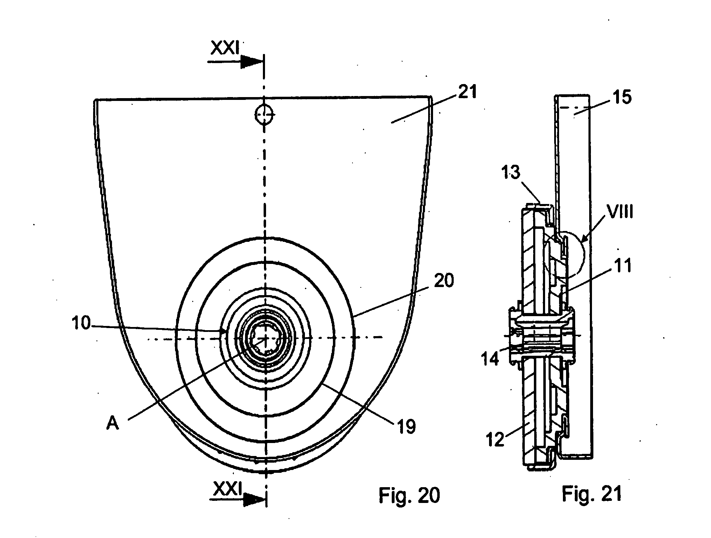

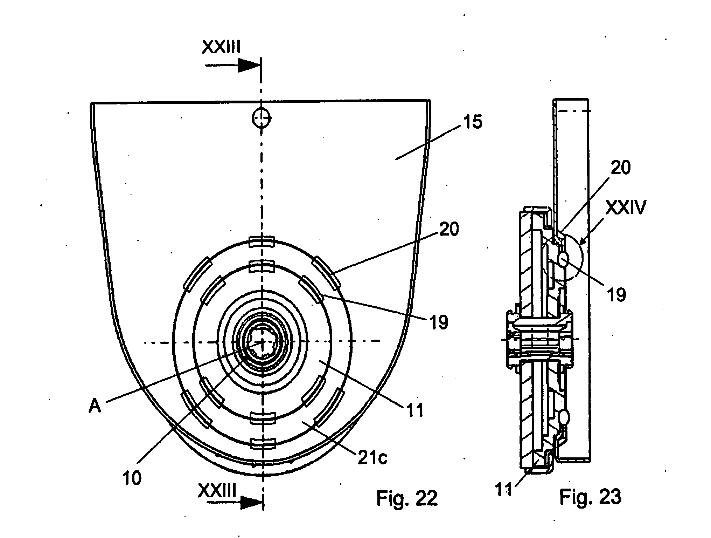

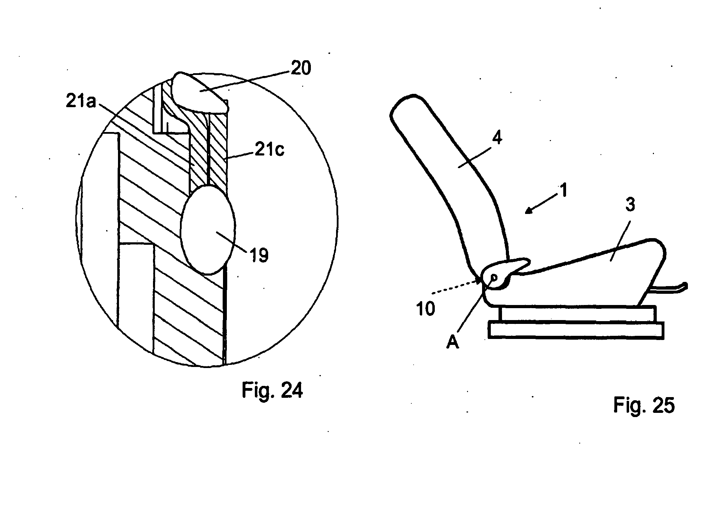

Im zweiten Ausführungsbeispiel (Fig. 8 bis 24) entsteht der Befestigungsbereich 18 aus einem kreisringförmigen Bereich 21a des Strukturteils 15, der um den zentralen, ausgestanzten Bereich herum angeordnet ist (Fig. 9, 10). Etwa die innere Hälfte des kreisringförmigen Bereichs 21a wird um ca. 90° nach außen zu einem Kragenzugbereich 21b gebogen (Fig. 11, 12), wobei die Biegerichtung derjenigen des Außenrandes 15a entspricht. Dieser Kragenzugbereich 21b wird in einem weiteren Schritt weiter nach außen gebogen, sprich vorgebördelt, wie in Fig. 13 und 14 dargestellt, jedoch kann dieser Schritt bei geeigneten Materialien, Materialstärken und/oder Kragenzugbreiten entfallen. In einem nachfolgenden Schritt wird der Kragenzugbereich 21b zu einem kreisringförmigen, umgelegten Randbereich 21c umgebördelt, d.h. die in Richtung des Außenrandes 15a weisende Fläche des kreisringförmigen Bereichs 21a, welche nicht umgebogen wurde, liegt an der 180° umgebogenen Fläche des kreisringförmigen, umgelegten Randbereichs 21c an (Fig. 15, 15). Der nicht-umgebogene Teil des kreisringförmigen Bereichs 21a und der kreisringförmigen, umgelegten Randbereichs 21c bilden zusammen den Befestigungsbereich 18 (x2 = 2·x1), der vorzugsweise fixiert wird durch die zweite Schweißnaht 20, d.h. durch eine unlösbare Verbindung der Bereiche 21a und 21c. Je nach Maßgenauigkeit des Umformvorgangs kann in einem nachfolgenden Schritt eine Nachbearbeitung mit einer Korrektur des Innendurchmessers der verbleibenden kreisförmigen Öffnung 16 und der Ausbildung der Kanten 17 erfolgen, beispielsweise mittels eines weiteren Umformvorgangs, gegebenenfalls aber auch spanabhebend (Fig. 17, 18). Anschließend wird der Beschlag 10 am fertigen Strukturteil 15 befestigt.

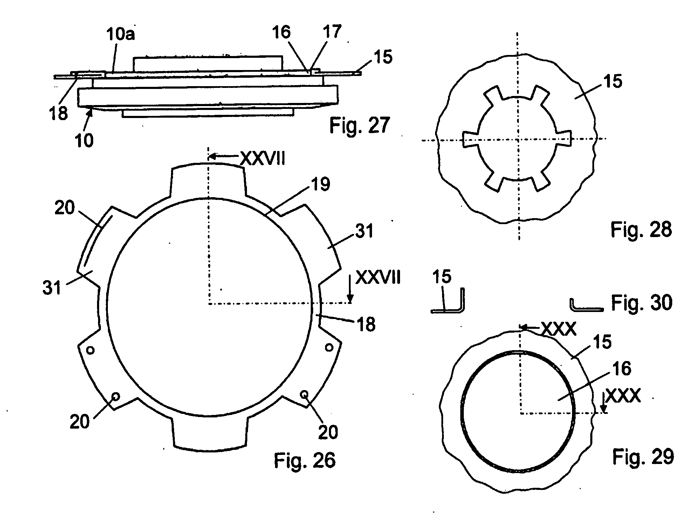

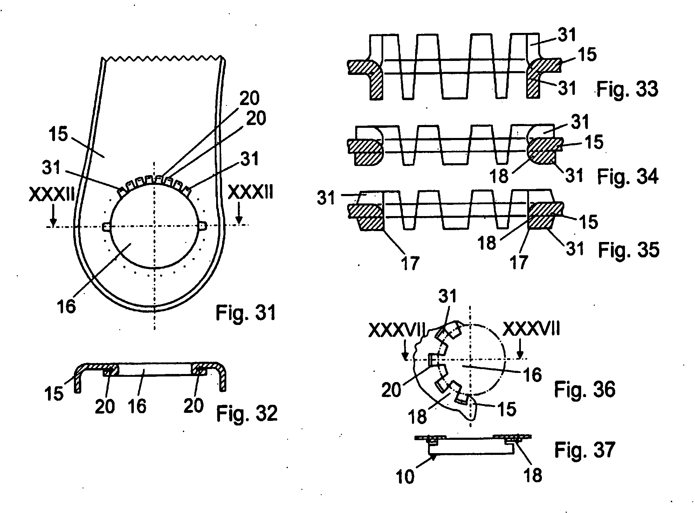

Im dritten bis fünften Ausführungsbeispiel (Fig. 26 bis 35) wird als zentraler Bereich ein Stern ausgestanzt (Fig. 28). Dadurch entstehen in Umfangsrichtung nebeneinander mehrere Segmente 31, welche beispielsweise eine trapezförmige oder rechteckförmige Gestalt aufweisen und untereinander durch Lücken getrennt sind. Die Segmente 31 werden wie ein Kragenzug um 90° zum nicht-umgeformten Bereich des Strukturteils 15 ausgestellt (Fig. 29, 30, 33), d.h. sie weisen in die axiale Richtung. Anschließend werden die Segmente 31 weiter radial nach außen umgelegt (umgebördelt), so dass sie auf dem angrenzenden Bereich des Strukturteils 15 als Materialdoppelung (x2 = 2 · x1) aufliegen (Fig. 34). Der ringförmige, stellenweise gedoppelte Bereich bildet den Befestigungsbereich 18. Die umgelegten Segmente 31 werden am nicht-umgelegten Bereich des Strukturteils 15 fixiert, vorzugsweise mittels je einer zweiten Schweißnaht 20 (vorzugsweise Laserschweißnaht) verbunden (Fig. 26, 27, 31, 32). Durch entsprechende Stempelgeometrien und Kalibriervorgänge wird das Material an der Biegekante außen möglichst ohne Biegeradien ausgeformt, stattdessen durch Nachbearbeitung dieses Übergangsbereichs zwischen nicht-umgelegtem und umgelegtem Bereich die Kanten 17 ausgebildet (Fig. 35). Dies erlaubt später eine verbesserte Verschweißung mit dem Beschlag 10.

Im dritten Ausführungsbeispiel (Fig. 26 bis 30) sind die Segmente 31 untereinander ähnlich beabstandet wie sie breit sind, d.h. in Umfangsrichtung sind der Abstand der Segmente 31 und die Breite der Segmente 31 ungefähr gleich. Beispielsweise ergeben sich sechs Segmente 31, die im Mittel ungefähr 30° breit sind, mit Lücken dazwischen, die ebenfalls im Mittel ungefähr 30° breit sind. Diese Segmente 3.1 sind beispielsweise alle in die gleiche Richtung umgelegt, nämlich aus der Ebene des nicht-umgelegten Bereichs des Strukturteils 15 auf die vom Beschlag 10 abgewandte Seite des Strukturteils 15. Der Bereich zwischen den Segmenten 31 wird bei der Ausbildung der Kanten 17 vorzugsweise so umgeformt, dass ein kleiner Teil davon auf der Seite der umgelegten Segmente 31 landet.

Im vierten Ausführungsbeispiel (Fig. 31, 32) sind die Segmente 31 von deutlich geringerer Breite und mit noch geringem Abstand voneinander beabstandet, beispielsweise im Mittel 10° breit mit einem mittleren Abstand von 5°. Die einzelnen Segmente 31 sind beispielsweise alle auf die vom Beschlag 10 abgewandte Seite des Strukturteils 15 umgelegt und durch je eine zweite Schweißnaht 20 gesichert.

Im fünften Ausführungsbeispiel (Fig. 33 bis 35) sind die Segmente 31 abwechselnd auf verschiedene Seiten des nicht-umgelegten Bereichs des Strukturteils 15 umgelegt. Jedes zweite Segment 31 ist auf die vom Beschlag 10 abgewandte Seite umgelegt, und jedes dazu versetzte zweite Segment 31 auf die dem Beschlag 10 zugewandte Seite. Insgesamt ergibt sich so für den Befestigungsbereich 18 die dreifache Materialstärke (x2 = 3 · x1), allerdings nur stellenweise in Umfangsrichtung und nicht über den vollen Umfang.

In einer Abwandlung (Fig. 36, 37) zu den drei vorgenannten Ausführungsbeispielen wird nur jedes zweite Segment 31 umgelegt und mittels einer zweiten Schweißnaht 20 befestigt. Die nicht-umgelegten Segmente 31 ragen radial nach innen in die Öffnung 16 und kommen bei der Anbindung des Beschlags 10 auf dessen Stirnseite zu liegen.

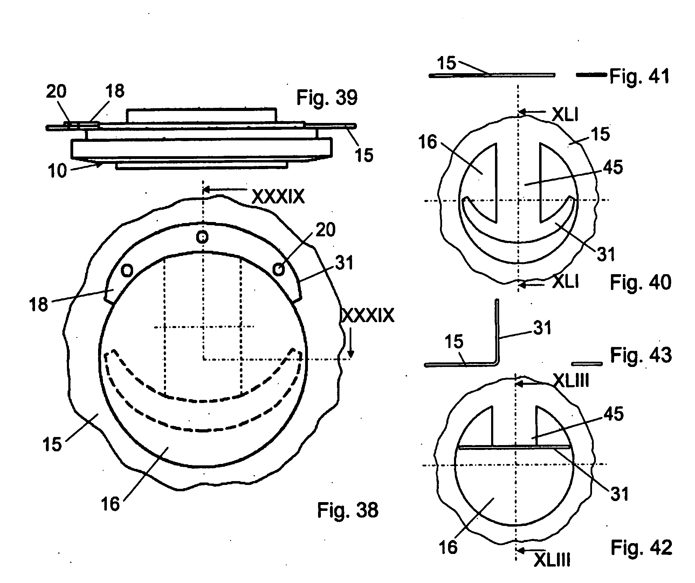

Im sechsten Ausführungsbeispiel (Fig. 38 bis 43) hat das ausgestanzte Segment 31 eine Mondform (Bogenform) mit einem Verbindungssteg 45 zum (oberen) Rand der ansonsten kreisrund ausgestanzten Öffnung 16 (Fig. 40, 41). Der Verbindungssteg 45 wird in seiner Mitte erst einmal um 90° (Fig. 42, 43) und dann nochmal um 90° gefaltet, so dass das Segment 31 am (oberen) Rand der Öffnung 16 auf dem Strukturteil 15 zu liegen kommen. Durch eine zweite Schweißnaht 20, worunter auch die Schweißpunkte fallen, wird das Segment 31 mit dem nicht-umgelegten Bereich des Strukturteils 15 verbunden, wodurch der Befestigungsbereich 18 entsteht. Im Unterschied zu den drei vorherigen Ausführungsbeispielen ist der Befestigungsbereich 18 nicht vollständig über den Umfang der Öffnung 16 verteilt, sondern lediglich bogenförmig am höher belasteten oberen Rand vorhanden. Um die Kante 17 auszubilden, wird der Verbindungssteg 45 abgeschnitten, beispielsweise gestanzt, wodurch die Öffnung 16 ihre endgültige Größe erreicht (Fig. 38, 39).

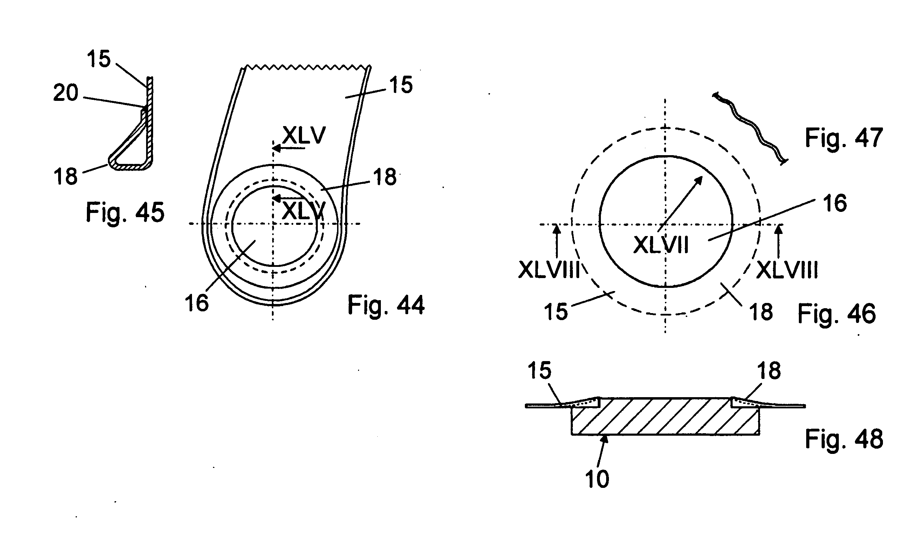

Das siebte Ausführungsbeispiel (Fig. 44, 45) ist eine Abwandlung des zweiten Ausführungsbeispiels. Wie dort, wird ein Kragenzugbereich hergestellt, von dem aber nur ein Teil, beispielsweise nur etwa die Hälfte seiner axialen Länge, schräg zurückgebogen und am kreisringförmigen Bereichs 21 a angelegt wird, vorzugsweise auch durch die zweite Schweißnaht 20 fixiert wird. So ergibt sich ein dreieckiges Profil.

Im achten Ausführungsbeispiel (Fig. 46 bis 48) wird durch einen in axialer Richtung (und Umfangsrichtung) wellenförmigen Befestigungsbereich 18 eine axiale Verbreiterung erreicht (x2 > x1), ohne zusätzliches Material zu benötigen.

Es sind noch weitere Versteifungsmöglichkeiten denkbar. Ferner kann durch Härten, beispielsweise eines Bor-Stahls, ein versteifter Befestigungsbereich 18 erzeugt werden.

### Bezugszeichenliste

- 1: Fahrzeugsitz
- 3: Sitzteil
- 4: Lehne
- 10: Beschlag
- 10a: Schulter
- 11: erstes Beschlagteil
- 12: zweites Beschlagteil
- 13: Umklammerungsring
- 14: Mitnehmer
- 15: Strukturteil
- 15a: Außenrand
- 16: Öffnung
- 17: Kante
- 18: Befestigungsbereich
- 19: erste Schweißnaht
- 20: zweite Schweißnaht
- 21a: kreisringförmiger Bereich
- 21b: Kragenzugbereich
- 21c: kreisringförmiger, umgelegter Bereich
- 31: Segment
- 45: Verbindungssteg
- A: Achse
- b: radiale Breite (des Befestigungsbereichs)
- d: Durchmesser (der Öffnung)
- g: Spaltbreite
- R: Radius
- x1: mittlere Materialstärke (des Strukturteils)
- x2: maximale Materialstärke (des Befestigungsbereichs)

## Patentansprüche

1. Fahrzeugsitz, insbesondere Kraftfahrzeugsitz, mit wenigstens einem Beschlag (10), welcher zwei relativ zueinander verdrehbare Beschlagteile (11, 12) aufweist, und wenigstens einem Strukturteil (15), welches wenigstens eine Öffnung (16) zur teilweisen Aufnahme des Beschlags (11, 12) und wenigstens einen die Öffnung (16) umgebenden Befestigungsbereich (18) aufweist zur Befestigung des Beschlags (10), insbesondere mittels wenigstens einer ersten Schweißnaht (19) zwischen dem Befestigungsbereich (18) und einem der beiden Beschlagteile (11, 12), wobei der Befestigungsbereich (18) gegenüber den anderen Bereichen des Strukturteils (15) durch weiteres Material versteift ist, **dadurch gekennzeichnet, dass** der Befestigungsbereich (18) durch Umformen oder Umlegen von Material versteift ist, welches bei der Ausbildung der Öffnung (16) für einen Kragenzug oder Segmente verbleibt.

2. Fahrzeugsitz nach Anspruch 1, **dadurch gekennzeichnet, dass** der Befestigungsbereich (18) durch Umformen oder Umlegen eines Kragenzugbereichs (21b) oder durch Umlegen wenigstens eines Segments (31) gebildet ist.

3. Fahrzeugsitz nach Anspruch 2, **dadurch gekennzeichnet, dass** das Strukturteil (15) ein Stanzbiegeteil aus Blech ist, wobei ein kreisringförmiger, umgelegter Bereich (21c) oder ein umgelegtes Segment (31) nach einem Herausstanzen einer Öffnung in mehreren Schritten um 180° umgebogen ist.

4. Fahrzeugsitz nach Anspruch 2 oder 3, **dadurch gekennzeichnet, dass** der umgelegte Bereich (21c) oder das umgelegte Segment (31) am nicht-umgelegten Bereich (21a) des Strukturteils (15) fixiert ist, insbesondere mittels einer zweiten Schweißnaht (20).

5. Fahrzeugsitz nach einem der Ansprüche 2 bis 4, **dadurch gekennzeichnet, dass** mehrere Segmente (31) vorgesehen sind, welche alle auf die gleiche Seite oder abwechselnd auf verschiedene Seiten des Strukturteils (15) umgelegt sind.

6. Fahrzeugsitz nach Anspruch 4, **dadurch gekennzeichnet, dass** ein bogenförmiges Segment (31) vorgesehen ist, welches mit einem Verbindungssteg (45) im Bereich der Öffnung (16) ausgestanzt ist, wobei der Verbindungssteg (45) nach dem Fixieren des Segments (31) abgeschnitten ist.

7. Fahrzeugsitz nach einem der Ansprüche 2 bis 6, **dadurch gekennzeichnet, dass** durch Nachbearbeitung des Übergangsbereichs zwischen dem nicht-umgeleg ten/nicht-umgeformten und dem umgelegten/umgeformten Bereich Kanten (17) ausgebildet sind, welche den Rand der Öffnung (16) definieren.

8. Fahrzeugsitz nach einem der vorhergehenden Ansprüche, **dadurch gekennzeichnet, dass** der Befestigungsbereich (18) ringförmig oder bogenförmig ausgebildet ist mit einer radialen Breite (b), die kleiner ist als der Durchmesser (d) der Öffnung (16).

9. Fahrzeugsitz nach Anspruch 8, **dadurch gekennzeichnet, dass** die Materialstärke des Befestigungsbereich (18) über die radiale Breite (b) hinweg von einer mittleren Materialstärke (x1) des Strukturteils (15) kontinuierlich anwächst bis zur maximalen Materialstärke (x2).

10. Fahrzeugsitz nach einem der vorhergehenden Ansprüche, **dadurch gekennzeichnet, dass** der Beschlag (10) an einem der beiden Beschlagteile (11, 12) eine Schulter (10a) aufweist, welche innerhalb der Öffnung (16) angeordnet ist.

11. Fahrzeugsitz nach Anspruch 7 und 10, **dadurch gekennzeichnet, dass** die erste Schweißnaht (19) im Bereich zwischen der Schulter (10a) und den Kanten (17) der Öffnung (16) angeordnet ist.

12. Fahrzeugsitz nach einem der vorhergehenden Ansprüche, **dadurch gekennzeichnet, dass** der Beschlag (10) eine Scheibenform aufweist.

13. Verfahren zur Herstellung eines Fahrzeugsitzes (1) nach einem der vorhergehenden Ansprüche, bei dem ein Beschlag (10) an einem Strukturteil (15) zu befestigen ist, **gekennzeichnet durch** die Schritte:
a) Ausstanzen eines zentralen Bereichs in einem Rohling des Strukturteils (15),
b) Ziehen eines Kragenzugbereichs (21b) oder Ausstellen von Segmenten (31) unter Bildung einer Öffnung (16),
c) Umlegen des Kragenzugbereichs (21 b) oder des Segments (31) unter Bildung eines Befestigungsbereichs (18), und
d) Befestigen des Beschlags (10) am fertigen Strukturteil (15).

## Claims

1. Vehicle seat, especially a motor vehicle seat, having at least one fitting (10) which presents two fitting parts (11, 12) twistable relative to one another, and at least one structural part (15) that presents at least one opening (16) for partially accommodating the fitting (11, 12) and at least one fastening area (18) surrounding the opening (16) for fastening the fitting (10) especially by at least one first welding seam (19) between the fastening area (18) and one of the two fitting parts (11, 12) while the fastening area (18), with regard to the other areas of the structural part (15), is reinforced by another material, **characterized in that** the fastening area (18) is reinforced by reforming or folding material which remains for drawing a collar or segments when forming the opening (16).

2. Vehicle seat as claimed in claim 1, **characterized in that** the fastening area (18) is formed by reforming or folding a collar drawing area (21 b) or by folding at least one segment (31).

3. Vehicle seat as claimed in claim 2, **characterized in that** the structural part (15) is a stamped and bent part made of sheet metal while an annulus-shaped folded area (21 c) or a folded segment (31) is bent by 180° in several steps after punching out an opening.

4. Vehicle seat as claimed in claims 2 or 3, **characterized in that** the folded area (21 c) or the folded segment (31) is fixed in position in the non-folded area (21 a) of the structural part (15) especially by a second welding seam (20).

5. Vehicle seat as claimed in any claim 2 through 4, **characterized in that** several segments (31) are provided and are all folded towards the same side or folded alternately to different sides of the structural part (15).

6. Vehicle seat as claimed in claim 4, **characterized in that** an arcuate segment (31) is provided and is punched out with a connecting web (45) in the area of the opening (16) while the connecting web (45) is cut off after fixing the segment (31) in position.

7. Vehicle seat as claimed in any claim 2 through 6, **characterized in that** edges (17) are formed by finishing the transition area between the non-folded/non-reformed and the folded/reformed areas, and define the border of the opening (16).

8. Vehicle seat as claimed in any preceding claim, **characterized in that** the fastening area (18) has an annular or arcuate shape with a radial width (b) which is smaller than the diameter (d) of the opening (16).

9. Vehicle seat as claimed in claim 8, **characterized in that** the material thickness of the fastening area (18) increases from an average material thickness (x1) of the structural part (15) continuously across the radial width (b) up to the maximum material thickness (x2).

10. Vehicle seat as claimed in any preceding claim, **characterized in that** the fitting (10) presents a shoulder (10a) at one of the two fitting parts (11, 12) which shoulder (10a) is located inside the opening (16).

11. Vehicle seat as claimed in claims 7 and 10, **characterized in that** the first welding seam (19) is located in the area between the shoulder (10a) and the edges (17) of the opening (16).

12. Vehicle seat as claimed in any preceding claim, **characterized in that** the fitting (10) has a disk shape.

13. Procedure for manufacturing a vehicle seat (1) as claimed in any preceding claim, in which a fitting (10) is to be fastened to a structural part (15), **characterized by** the steps:
a) Punch out a central area in a blank of the structural part (15);
b) Pull a collar drawing area (21 b) or raise segments (31) while forming an opening (16);
c) Fold the collar drawing area (21 b) or the segment (31) while forming a fastening area (18), and
d) Fasten the fitting (10) to the finished structural part (15).

## Revendications

1. Siège de véhicule, en particulier siège de véhicule automobile, avec au moins une ferrure (10) comportant deux pièces de ferrure (11, 12) rotatives l'une par rapport à l'autre, et au moins une pièce de structure (15) comportant au moins une ouverture (16) pour le logement partiel de la ferrures (11, 12) et au moins une zone de fixation (18) entourant l'ouverture (16) pour la fixation de la ferrure (10), en particulier au moyen d'au moins un premier cordon de soudure (19) entre la zone de fixation (18) et une des deux pièces de ferrure (11, 12), la zone de fixation (18) étant renforcée par un autre matériau par rapport aux autres zones de la pièce de structure (15), **caractérisé en ce que** la zone de fixation (18) est renforcée par déformation ou par bordage de matériau restant pour une collerette ou pour des segments lors de la réalisation de l'ouverture (16).

2. Siège de véhicule selon la revendication 1, **caractérisé en ce que** la zone de fixation (18) est réalisée par déformation ou par bordage d'une zone de collerette (21 b) ou par bordage d'au moins un segment (31).

3. Siège de véhicule selon la revendication 2, **caractérisé en ce que** la pièce de structure (15) est une pièce estampée-pliée en tôle, une zone bordée (21 c) en couronne torique ou un segment bordé (31) étant rabattus de 180°en plusieurs passes après découpe à la presse d'une ouverture.

4. Siège de véhicule selon la revendication 2 ou la revendication 3, **caractérisé en ce que** la zone bordée (21 c) ou le segment bordé (31) sont fixés contre la zone non bordée (21 a) de la pièce de structure (15), en particulier au moyen d'un deuxième cordon de soudure (20).

5. Siège de véhicule selon l'une des revendications 2 à 4, **caractérisé en ce que** plusieurs segments (31) sont prévus, lesquels sont bordés tous sur le même côté ou en alternance sur des côtés différents de la pièce de structure (15).

6. Siège de véhicule selon la revendication 4, **caractérisé en ce qu'**un segment (31) en arc est prévu, lequel est découpé à la presse avec une entretoise de connexion (45) dans la zone de l'ouverture (16), l'entretoise de connexion (45) étant retirée par découpe après la fixation du segment (31).

7. Siège de véhicule selon l'une des revendications 2 à 6, **caractérisé en ce que** des arêtes (17) sont réalisées par usinage consécutif de la zone de transition entre la zone non bordée/non déformée et la zone bordée/déformée, lesquelles définissent le bord de l'ouverture (16).

8. Siège de véhicule selon l'une des revendications précédentes, **caractérisé en ce que** la zone de fixation (18) est réalisée en forme d'anneau ou d'arc avec une largeur radiale (b) qui est inférieure au diamètre (d) de l'ouverture (16).

9. Siège de véhicule selon la revendication 8, **caractérisé en ce que** l'épaisseur de matériau de la zone de fixation (18) croît de manière continue sur la largeur radiale (b), d'une épaisseur moyenne de matériau (xl) de la pièce de structure (15) jusqu'à l'épaisseur de matériau maximale (x2).

10. Siège de véhicule selon l'une des revendications précédentes, **caractérisé en ce que** la ferrure (10) présente un épaulement sur une des deux pièces de ferrure (11, 12), lequel est disposé à l'intérieur de l'ouverture (16).

11. Siège de véhicule selon les revendications 7 et 10, **caractérisé en ce que** le premier cordon de soudure (19) est disposé dans la zone entre l'épaulement (10a) et les arêtes (17) de l'ouverture (16).

12. Siège de véhicule selon l'une des revendications précédentes, **caractérisé en ce que** la ferrure (10) est en forme de disque.

13. Procédé de fabrication d'un siège de véhicule (1) selon l'une des revendications précédentes, où une ferrure (10) doit être fixée sur une pièce de structure (15), **caractérisé par** les étapes suivantes :
a) découpe à la presse d'une zone centrale dans une ébauche de la pièce de structures (15),
b) étirage d'une zone de collerette (21 b) ou étirage de segments (31) en formant une ouverture (16),
c) bordage de la zone de collerette (21 b) ou du segment (31) en formant une zone de fixation (18), et
d) fixation de la ferrure (10) contre la pièce de structure (15) finie.
